## Europäisches Patentamt
## European Patent Office
## Office européen des brevets

(19)

(11) Numéro de publication: **0 009 557**
**B1**

(12) **FASCICULE DE BREVET EUROPEEN**

(45) Date de publication du fascicule du brevet: **09.02.83**

(51) Int. Cl.³: **H 04 L 25/49, H 04 L 5/02**

(21) Numéro de dépôt: **79102638.8**

(22) Date de dépôt: **25.07.79**

(54) **Procédé et circuit pour coder simultanément deux séquences de signaux binaires en une séquence d'impulsions, procédé et circuit pour décoder cette dernière séquence, et leur application à un émetteur-récepteur d'interface.**

(30) Priorité: **09.10.78 FR 7829352**

(43) Date de publication de la demande:
**16.04.80 Bulletin 80/8**

(45) Mention de la délivrance du brevet:
**09.02.83 Bulletin 83/6**

(84) Etats contractants désignés:
**DE FR GB**

(56) Documents cités:
**US - A - 4 092 595**

**IEEE TRANSACTION ON COMMUNICATION TECHNOLOGY, vol. COM—19, no. 2, avril 1971, New York US DUNN: "Airframe Requirements for Future Communications" pages 228—233.**

(73) Titulaire: **International Business Machines Corporation**
**Armonk, N.Y. 10504 (US)**

(72) Inventeur: **Monrolin, Jean-Louis**
**Le Roc du Trigan**
**F-06610 - La Gaude (FR)**
Inventeur: **Vachee, Pierre**
**La Cariatide 32 Plan du Bois**
**F-06610 - La Gaude (FR)**

(74) Mandataire: **de Pena, Alain**
**COMPAGNIE IBM FRANCE Departement de Propriété Industrielle**
**F-06610 La Gaude (FR)**

**0 009 557**

Procédé et circuit pour coder simultanément deux séquences de signaux binaires en une séquence d'impulsions, procédé et circuit pour décoder cette dernière séquence, et leur application à un émetteur-récepteur d'interface

## Description
### Domaine Technique

L'invention concerne un procédé pour coder simultanément deux séquences de signaux binaires en une séquence d'impulsions, le procédé de décodage associé, et leur application à un procédé et un dispositif de transmission destiné notamment à permettre une simplification des réseaux de circulation de données entre un calculateur et des terminaux.

Les réseaux de télétraitement comportent généralement un ou plusieurs ordinateurs desservant des équipements terminaux de traitement des données, ou terminaux, c'est-à-dire échangeant avec ceux-ci tout un flot de signaux binaires, ou bits, au travers de lignes de transmission. Dans chaque réseau, la multiplicité des terminaux se traduit par une multiplicité de voies de transmission, donc par une complexité et un coût élevé des installations. En outre, il ne faut pas oublier qu'en plus des signaux de données proprement dits, les communications entre chaque terminal et le calculateur associé, mettent en jeu de nombreux autres signaux logiques. L'ensemble des signaux à considérer peut être divisé en deux groupes semblables: un groupe d'émission (partant du terminal) et un groupe de réception (allant vers le terminal). Chacun desdits groupes comprend en général:

des signaux de données,
des signaux de commande tels que "demande pour émettre", "prêt à émettre", "poste de données prêt", "connecter le poste de données sur la ligne", etc.,
des signaux d'horloge éventuels.

Si l'on affectait une ligne de transmission à chacun de ces signaux le nombre de ligns à utiliser serait relativement important, ce qui constitue naturellement un inconvénient.

### Etat de la Technique

L'emploi des techniques dites de multiplexage permet de diminuer le nombre de lignes du réseau, mais entraîne un ralentissement des communications et surtout revient relativement cher lorsque l'on emploie les systèmes connus. En outre, dans les calculateurs on utilise généralement un signal de tension d'amplitude non nulle pour représenter l'une des valeurs binaires de chacun des bits, et un signal de tension d'amplitude nulle pour l'autre valeur. Ces signaux s'adaptent mal à une transmission sur ligne classique, ce qui explique les traitements auxquels ils sont soumis avant transmission. On notera à cet effet, notamment les propositions de I. Dorros et al formulées dans un article intitulé "An Experimental 224 Mb/s Digital Repeatered Line" publié dans le Bell System Technical Journal de septembre 1966. Les auteurs y recommandent l'utilisation d'un code dit PST selon lequel la séquence de bits à transmettre est scindée en paires de bits puis convertie en une séquence de signaux ternaires définis conformément à une table de conversion.

L'un des inconvénients majeurs du code dit PST résulte de son caractère polarisé. En effet, les paires de bits "11" et "00" sont respectivement converties en une impulsion positive suivie d'une impulsion négative (+ −) et en une impulsion négative suivie d'une impulsion positive (− +). Il peut en résulter une ambiguïté de phase de 180° entre les signaux dérivant des couples "11" et "00" à la réception. Cette ambiguïté peut naturellement être levée au moment de l'installation du matériel par une inversion des fils de la ligne de transmission à l'une de ses extrémités après le test de la liaison. Il n'en demeure pas moins qu'en pratique cette contrainte est particulièrement gênante. D'autre part, les paires de bits "10" et "01" étant respectivement converties en + ou − suivi de zéro et zéro suivi de + ou −, risquent d'engendrer un décalage du niveau de référence si la séquence d'origine présente un déséquilibre entre les nombres de zéro et de un. De plus le code PST ne permet pas un décodage simple du signal qui en résulte. Et surtout, ce code ne s'applique qu'à une séquence binaire unique et donc se prête mal à des applications dans lesquelles on désire utiliser, de manière simple et peu onéreuse, les techniques de multiplexage.

### Exposé de l'Invention

Un objet de l'invention est de fournir un procédé pour coder simultanément deux séquences de signaux binaires en une séquence d'impulsions et le procédé de décodage associé qui apportent une solution aux problemes souleves par l'utilisation des techniques antérieures.

Un autre objet de l'invention est de fournir un procédé pour transmettre simultanément deux séquences de signaux binaires sur une même ligne de transmission.

Un autre objet de l'invention est de fournir un circuit d'interface qui permet les échanges de données et de commandes sur une même ligne entre deux équipements terminaux de données.

2

**0 009 557**

D'une manière générale, l'invention concerne un procédé et un dispositif pour coder simultanément une première et une seconde séquences de signaux binaires en une séquence d'impulsions. Selon le procédé de l'invention, on groupe les signaux binaires en paires, chacune d'elles comprenant un signal binaire de la première séquence et un signal binaire de la seconde séquence. Chaque paire est ensuite codée de la façon suivante: si le signal binaire provenant de la première séquence est à un premier niveau binaire, on code la paire en un signal du type bipolaire; si le signal binaire provenant de la première séquence est à un second niveau binaire, on code la paire en un signal du type biphasé.

Appliqué à la transmission de données, le procédé permet de réaliser un circuit d'interface simple qui permet notamment les échanges de données et de commande entre deux équipements terminaux de données. L'une des deux séquences de signaux binaires sera avantageusement constituée par le résultat du multiplexage dans le temps des diverses commandes que doivent échanger les deux équipements terminaux de données.

D'autres objets, caractéristiques et avantages de la présente invention ressortiront mieux de l'exposé qui suit, fait en référence aux dessins annexés à ce texte, qui représentent un mode de réalisation préféré de celle-ci.

### Brève description des figures

La figure 1 représente le schéma conventionnel d'un système de transmission entre deux équipements terminaux de traitement de données (DTE).

La figure 2 est l'agrandissement d'une partie du schéma de la figure 1.

La figure 3 représente le schéma d'un système de transmission entre deux DTE utilisant l'invention.

La figure 4 représente un circuit d'interface émission conforme à l'invention.

La figure 5 est un exemple de codage appliquant l'invention.

La figure 6 représente un exemple de réalisation du circuit de codage 10 de la figure 4.

La figure 7 représente un circuit d'interface réception conforme à l'invention.

La figure 8 représente un exemple de réalisation du récepteur analogique RA1 de la figure 7.

Les figures 9 à 11 illustrent le fonctionnement du circuit d'interface réception de la figure 7.

La figure 12 représente un exemple de réalisation du circuit de décodage 51 de la figure 7.

### Description d'un Mode de Réalisation de l'Invention

On décrira tout d'abord le procédé de codage de l'invention. On considére deux séquences de signaux binaires, ou bits, dont on désignera respectivement les bits par D et L; ces deux séquences ont des temps bits égaux. Selon l'invention, on constitue des paires de bits D et L, chacun d'eux appartenant à une séquence respective. Chaque paire est codée conformément à la table ci-dessous.

TABLE I

| D | L | Codage | | |
|---|---|--------|--------|---|
| | | T1 | T2 | |
| 0 | 0 | 0 | 0 | } bipolaire |
| 1 | 0 | (+) ou (−) | 0 | |
| 0 | 1 | (−) | (+) | } biphase |
| 1 | 1 | (+) | (−) | |

où $T_1 = T_2 = T/2$

T = durée d'un temps bit

(−) impulsion négative

(+) impulsion positive

**0 009 557**

Les signaux résultant du traitement des paires 00 et 10 sont des signaux du type bipolaire, tandis que ceux résultant du traitement des paires 01 et 11 sont des signaux du type biphasé. Ceci présente de nombreux avantages notamment au décodage. En effet, la valeur du bit L sera donnée par la reconnaissance du type du signal à décoder. Si celui-ci est bipolaire on en déduit que L=0, s'il est biphasé, L=1. Les deux types de signaux peuvent être séparés sans ambiguïté en partant du fait que les signaux du type diphasé comportent toujours deux polarités distinctes dans un même temps bit T, alors que les signaux du type bipolaire ne comportent au plus qu'une polarité par temps bit. On peut en outre éviter de manière relativement simple, l'ambiguïté de phase de 180° du signal biphasé. Ceci se fera notamment en codant au préalable les bits D en différentiel lorsque le bit L est 1, et en conservant le codage binaire classique pour le bit D lorsque L=0. Dans le codage différentiel l'information est donnée par différence avec l'information précédente (uniquement pour L=1), par exemple une transition correspondra à un "1" et pas de transition à un "0". L'entrelacement de ces deux codes sera indépendant de la polarité absolue et le signal pourra être inversé sans répercussion sur son interprétation.

En outre les bits L pourront résulter du multiplexage dans le temps de plusieurs séquences de signaux binaires, comme on le verra plus loin.

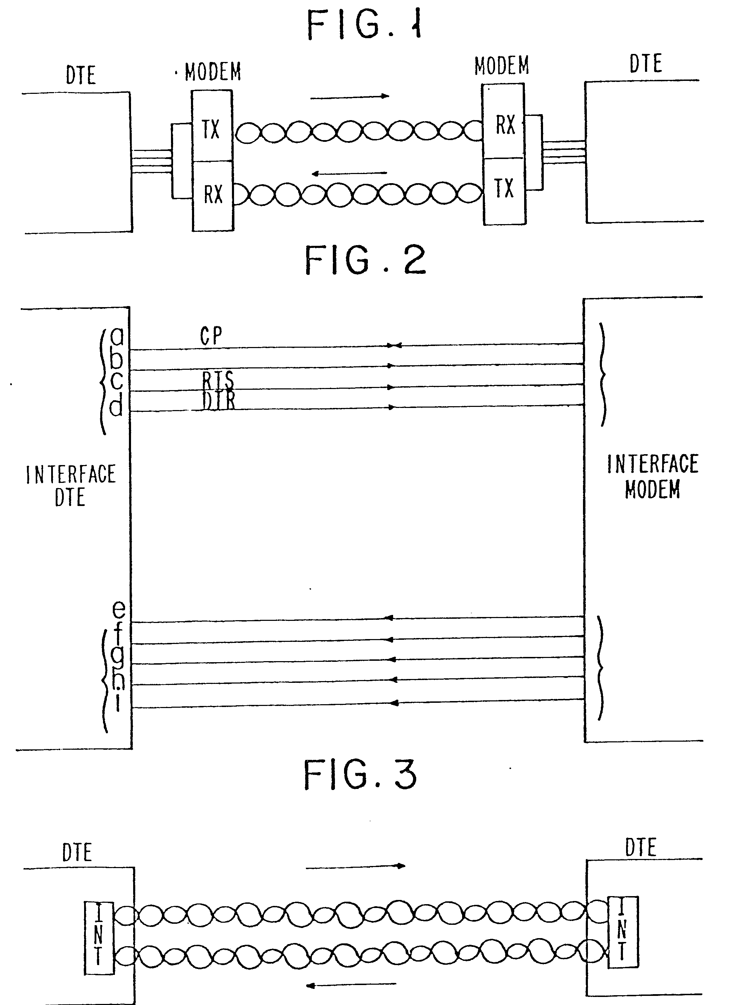

Compte tenu de ses caractéristiques, l'invention se prête particulièrement bien au domaine des communications entre un calculateur et ses terminaux. En fait le calculateur ne communique pas en général directement avec ses terminaux mais le fait au travers d'un équipement terminal de traitement de données qui lui est associé. Les échanges de données et séquences s'effectuent donc entre deux équipements terminaux de données (en abrégé DTE). Les liaisons classiques entre deux DTE se font généralement selon la schéma de la figure 1. On y remarque la présence de deux modulateurs-démodulateurs (modems), destinés à faciliter les transmissions en tenant compte des caractéristiques électriques des lignes. Chacun des modems est associé à un DTE, et placé à proximité de celui-ci.

Des lignes bifilaires relient la partie d'émission (TX) d'un modem à la partie réception (RX) de l'autre. Mais entre deux DTE, le nombre de fils est élevé comme le montre la figure 2 pour le cas d'un interface standard. On y distingue neuf fils, quatre pour l'émission et cinq pour la réception. Ces fils sont respectivement destinés à véhiculer les signaux suivants définis selon les recommandations du CCITT:

(a) Horloge d'émission (CP)
(b) Données émises
(c) Demande pour émettre (RTS)
(d) Equipement terminal de données prêt (DTR)
(e) Horloge de réception
(f) Données reçues
(g) Prêt à émettre
(h) Poste de données prêt
(i) Détecteur du signal de ligne reçu sur la voie de donnée.

D'autres signaux peuvent encore être nécessaires pour certains types de liaisons, mais ceux mentionnés ci-dessus sont les plus couramment utilisés.

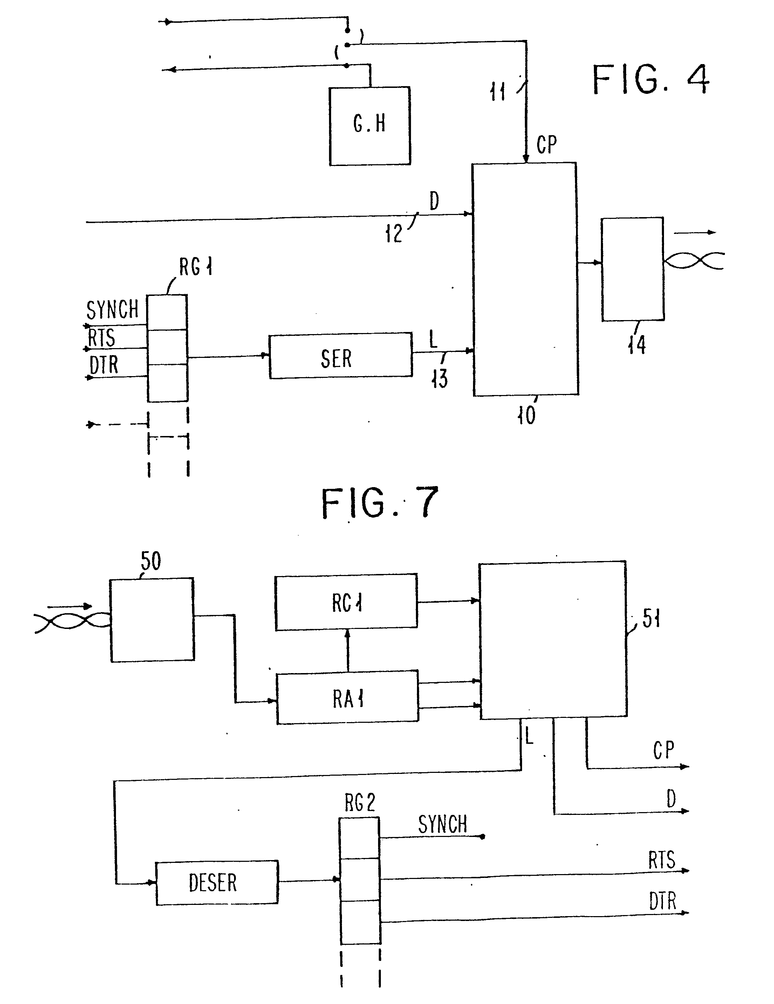

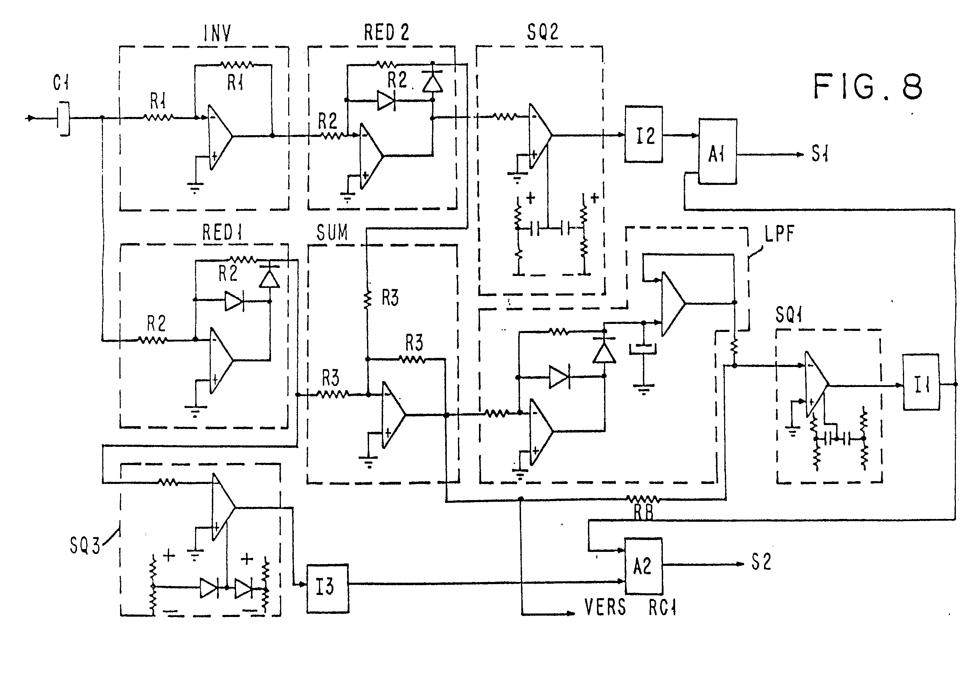

On peut les répartir en signaux d'horloge, signaux de commande et signaux de données. On propose ici de réduire le nombre de fils destinés au transport de ces signaux comme le montre la figure 3, en appliquant les principes que l'on décrira ci-dessous. Les modems sont alors remplacés des circuits d'interface (INT) comportant une partie d'émission (voir figure 4) et une partie de réception (voir figure 7).

On remarque tout d'abord sur la figure 4 que les signaux de commande sont soumis aux techniques dites de multiplexage. En effet, à l'émission, le circuit de codage 10 où l'on va traiter les signaux pour les transmettre sur une ligne bifilaire unique, comporte trois entrées. Une entrée 11 pour les signaux horloge (CP), une entrée 12 pour les données (D) et une entrée 13 sur laquelle sont disponibles les signaux (L) provenant du multiplexage des signaux de commande. Le circuit de multiplexage comporte un registre RG1 sur lequel arrivent les diverses commandes à multiplexer, RTS, DTR,... et le signal de synchronisation de multiplexage SYNCH, et un registre de conversion parallèle-série SER.

Les signaux d'horloge (CP) sont fournis soit par un générateur interne G.H., soit par une horloge externe non représentée sur la figure. Ils servent à définir le rythme auquel les séquences de signaux binaires L et D seront codées en une séquence d'impulsions en appliquant les principes de l'invention. Les signaux sortant du circuit de décodage 10 sont envoyés sur la ligne de transmission après passage dans un adaptateur 14 amenant leurs tensions à des niveaux suffisants pour attaquer les lignes de transmission.

Le fonctionnement logique du circuit de codage 10 obéit à la table de vérité ci-après:

4

TABLE II

| L à | | Signal à | D | | Mémoire bipolaire | Mémoire biphase | Sortie Codeur à | | | |
|---|---|---|---|---|---|---|---|---|---|---|
| $T_{-1}$ | $T_0$ | $T_0$ | à $T_0$ | Transition à $T_0$ | $F_2$ | $F_1$ | $T_{-1}$ | | $T_0$ | |
| 1 | 1 | Biphase | 0 | NON | X | 1 | (+) | (−) | (+) | (−) |
| | | | | | X | 0 | (−) | (+) | (−) | (+) |
| 1 | 1 | Biphase | 1 | OUI | X | 1 | (+) | (−) | (−) | (+) |
| | | | | | X | 0 | (−) | (+) | (+) | (−) |
| 0 | 0 | Bipolaire | 0 | | X | X | X | X | 0 | 0 |
| | | | | | X | X | X | X | 0 | 0 |
| 0 | 0 | Bipolaire | 1 | | 1 | X | (+) | 0 | (−) | 0 |
| | | | | | 0 | X | (−) | 0 | (+) | 0 |
| 1 | 0 | Bipolaire | 0 | | X | X | X | $\overline{X|X}$ | 0 | 0 |
| | | | | | X | X | X | | 0 | 0 |
| 1 | 0 | Bipolaire | 1 | | 1 | X | X | $\overline{X|X}$ | (−) | 0 |
| | | | | | 0 | X | X | X | (+) | 0 |
| 0 | 1 | Biphase | 0 | NON | X | 1 | X | 0 | (+) | (−) |
| | | | | | X | 0 | X | 0 | (−) | (+) |
| 0 | 1 | Biphase | 1 | OUI | X | 1 | X | 0 | (−) | (+) |
| | | | | | X | 0 | X | 0 | (+) | (−) |

Dans cette table:

$T_0$ désigne l'instant présent (plus exactement le temps bit en cours)

$T_{-1}$ désigne le dernier temps bit précédant $T_0$

Les colonnes D à $T_0$ et L à $T_0$ représentent les valeurs des bits D et L au temps $T_0$. De la configuration de chacune des paires de bits constituée d'un bit D et d'un bit L, on déduit le signal à utiliser au temps bit $T_0$ conformément à la table I. La valeur logique de L à $T_{-1}$ permet de savoir si au temps bit précédant immédiatement $T_0$ le signal était bipolaire ou biphasé.

En outre le contenu des "mémoire biphase" et "mémoire bipolaire" permet de décider de la polarité des signaux à utiliser au temps bit en cours de traitement. En effet, les polarités des signaux engendrés en $T_0$ dépendront de celles de signaux précédents de même type et dont on gardera une trace dans une position de mémoire. Par exemple, D=1 et L=0, il faut, selon la table I choisir entre (+), O et (—), O. Ce choix dépend du dernier signal bipolaire précédent.

Pour connaître celle-ci, consultera la position dite de "mémoire bipolaire" $F_2$ dans laquelle on aura mis un bit "1" ou "0" selon que le dernier signal bipolaire était (+), O ou (—), O. Le même principe est utilisé en biphasé bien que cela n'apparaisse pas sur la table I le codage différentiel n'étant pas encore appliqué à ce niveau. Le codage différentiel s'effectuera en consultant une mémoire dite "mémoire biphase" $F_1$ dans laquelle on aura mis un bit "1" ou "0" selon que le dernier signal biphasé était (+), (—) ou (—), (+). Par convention nous avons décidé d'effectuer une transition lorsque (pour L=1) D=1, en biphase cela se traduit par une inversion de phase du signal.

En consultant la table II pour L=1 et D=1 on constate bien un changement de phase du signal biphase de $T_{-1}$ à $T_0$, la mémoire biphase $F_1$ permettant de différentier les deux cas. Pour L=1 et D=0 nous avons décidé qu'il n'y aurait pas de transition, donc pas de changement de phase, et cela est illustré dans la table II.

Les choix définis ci-dessus ne sont pas impératifs, mais ils permettent d'optimiser, dans une certaine mesure, les qualités spectrales du signal finalement envoyé sur la ligne de sortie de l'émetteur.

On rajoutera en outre que bien que l'on décrive ici l'invention en supposant que l'on utilise du bipolaire d'ordre un, l'homme de l'art pourra l'étendre très simplement à d'autres types de bipolaire. De même, il pourra employer l'invention pour des codes plus sophistiqués tels que notamment le CHDB, décrit par A. Croisier dans la revue IEEE Transactions on Communication Technology de juin 1970, pages 265 et suivantes.

Mais revenons à la table II. Celle-ci décrit les différentes situations suivantes:

(1) A l'instant $T_0$, D=0 et L=1; selon la table I le signal codé doit être biphasé. Mais pour ce qui est des polarités, il faut tenir compte du signal codé précédent. On constate que, à $T_{-1}$ on avait L=1 signifiant qu'à cet instant là, le signal était aussi biphasé. Donc $T_{-1}$ est le temps bit précédent auquel on avait un signal codé biphasé et qui soit le plus proche de $T_0$. Selon que la mémoire biphase" comporte un "1" ou un "0" on en déduit que le signal codé biphasé à $T_{-1}$ était (+), (—) ou (—), (+). Le signal à $T_0$ devra donc être (+), (—) dans le premier cas et (—), (+) dans le second cas. De ce qui précède il résulte que le contenu de la "mémoire bipolaire" n'a aucun rôle dans le cas considéré: c'est ce que l'on a traduit en mettant X dans la colonne correspondante de la table II.

(2) A la ligne suivante de la table II, D=1 et L=1 à $T_0$. Le signal doit toujours être biphasé. Comme à $T_{-1}$, L=1, le cas est semblable à celui de la ligne précédente de la table II. Ce qui permettra de distinguer entre les deux cas, c'est l'information dite "transition à $T_0$". En effet, comme on l'a signalé plus haut, le bit D est codé en différentiel lorsque L=1 et dans ce cas à un D=1 correspond une transition de niveau. Constatant cette transition, le codeur faire suivre (+), (—) par (—), (+) et inversement, contrairement au cas précédente. Il y a alors inversion de phase du signal biphasé, ce qui traduit la transition.

(3) Puis D=0 et L=0 à $T_0$ indique que le signal doit être bipolaire 0,0. Ici, ce qui précédait importe peu.

(4) D=1, L=0 à $T_0$. Le signal doit être bipolaire. L=0 à $T_{-1}$ indique que le signal était aussi bipolaire à cet instant là. Si la "mémoire bipolaire" contient 1, on avait (+), O à $T_{-1}$ auquel devra succéder (—), O à $T_0$. Si la "mémoire bipolaire" contient 0, on est dans le cas contraire et on utilisera (+), O au temps $T_0$.

(5) A $T_0$, D=0 et L=0: le signal bipolaire 0,0 s'impose, quelle que soit la situation précédente. On a représenté par X et $\overline{X}$ le signal biphasé au temps bit précédent, à savoir $T_{-1}$, puisque sa polarité n'a aucune incidence sur le signal à engendrer en $T_0$.

(6) D=1 et L=0 à $T_0$: on choisit un signal bipolaire. Ce signal doit être (—), O ou (+), O, selon que la mémoire bipolaire contient 1 ou 0.

(7) D=0 et L=1 à $T_0$: on choisit le signal biphasé (+), (—) ou (—), (+) selon que la "mémoire biphase" contient 1 ou 0.

(8) D=1 et L=1 à $T_0$: on choisit le signal biphasé. Une inversion de phase du signal biphase doit être effectuée, la mémoire $F_1$ permet de choisir les polarités convenables.

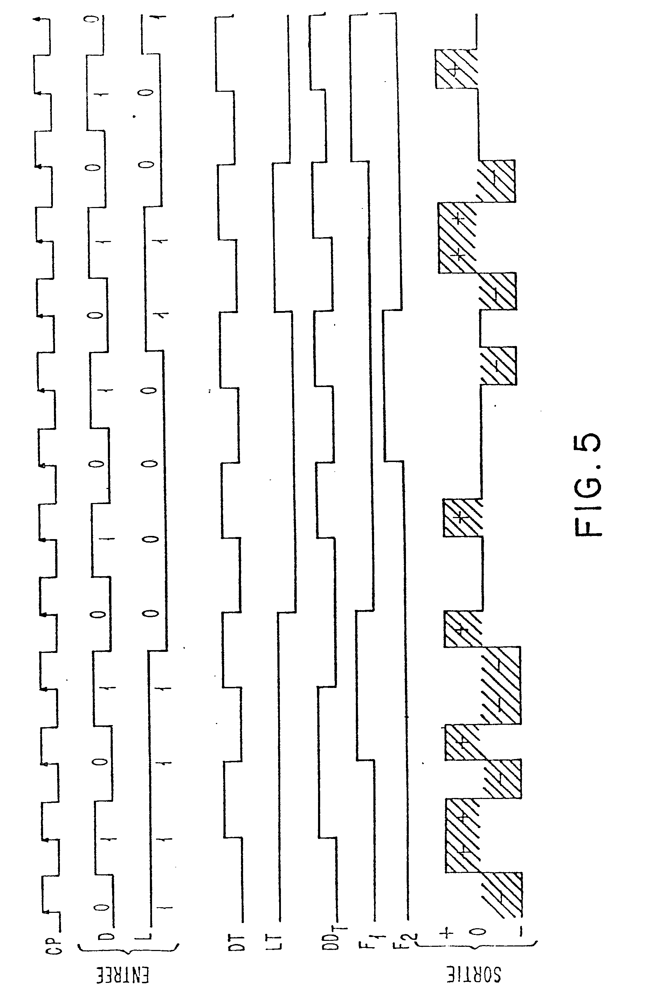

On a représente sur la figure 5 un diagramme temporel retraçant les différentes situations résumées ci-dessus. Ce diagramme est très simple à comprendre à condition de noter que $D_T$ et $L_T$ sont respectivement les niveaux logiques de D et L aux instants d'échantillonnage définis par les flèches du signal horloge CP, et que L et D sont codées en binaire simple avec niveau bas pour zéro et haut pour un. On a représenté en outre une ligne $DD_T$ sur laquelle figure le signal $D_T$ codé en différentiel lorsque

$L_T=1$ et en binaire simple à savoir niveau haut pour $D_T=1$, et niveau bas pour $D_T=0$, lorsque $L_T=0$.

premier temps bit (le plus à gauche sur la figure 5), $D_T=0$, $L_T=1$ et $F_1=0$: on a choisi le signal (−), (+). On trouve donc, pour ce temps bit, un signal biphasé (−), (+) en "Sortie",

second temps bit: $D_T=1$, $L_T=1$ et $F_1=0$: le signal est biphasé, mais comme $D_T=1$, il y a transition sur D (voir $DD_T$) et le signal est (+), (−),

troisième temps bit: $D_T=0$, $L_T=1$ et $F_1=1$. Le signal est biphasé (+), (−).

quatrième temps bit: $D_T=1$, $L_T=1$ et $F_1=1$. Le signal est biphasé (−), (+),

cinquième temps bit: $D_T=0$, $L_T=0$, $F_2=0$. Le signal est bipolaire 0,0,

sixième temps bit: $D_T=1$, $L_T=0$, $F_2=0$. Le signal est bipolaire (+), 0,

septième temps bit: $D_T=0$, $L_T=0$, $F_2=1$. Le signal est bipolaire 0,0,

huitième temps bit: $D_T=1$, $L_T=0$, $F_2=1$. Le signal est bipolaire (−), 0,

neuvième temps bit: $D_T=0$, $L_T=1$, $F_1=0$. Le signal est biphasé (−), (+),

dixième temps bit: $D_T=1$, $L_t=1$, $F_1=0$. Le signal est biphasé (+), (−),

onzième temps bit: $D_T=0$, $L_T=0$, $F_2=0$. Le signal est bipolaire 0,0,

douzième temps bit: $D_T=1$, $L_T=0$, $F_2=0$. Le signal est bipolaire (+), 0.

La séquence d'impulsions représentée sur la ligne inférieure de la figure est ainsi obtenue à la sortie du circuit de codage 10.

En d'autres termes, le circuit de codage 10:

génère les signaux $L_T$, $\overline{L_T}$, $D_T$, $\overline{D_T}$, $F_1$, $\overline{F_1}$, $F_2$ et $\overline{F_2}$ à partir des signaux CP, D et L,

génère des signaux logiques U, V, W conformément aux relations logiques suivantes:

$$U = CP\ (L_T.\overline{D_T}.F_1 + L_T.D_T.\overline{F_1} + \overline{L_T}.D_T.F_2) +$$

$$\overline{CP}\ (L_T.\overline{D_T}.\overline{F_1} + L_T.D_T.F_1) \tag{1}$$

$$V = CP\ (\overline{F_1}.\overline{D_T}.L_T + F_1.D_T.L_T + F_2.D_T.\overline{L_T}) +$$

$$\overline{CP}\ (F_1.\overline{D_T}.L_T + \overline{F_1}.D_T.L_T) \tag{2}$$

$$W = CP\ (\overline{L_T}.\overline{D_T}) + \overline{CP}.\overline{L_T} \tag{3}$$

engendre une impulsion de sortie positive lorsque le signal U est égal à 1, engendre une impulsion de sortie négative lorsque le signal V est égal à 1, et fournit un signal de sortie nul lorsque le signal W est égal à 1.

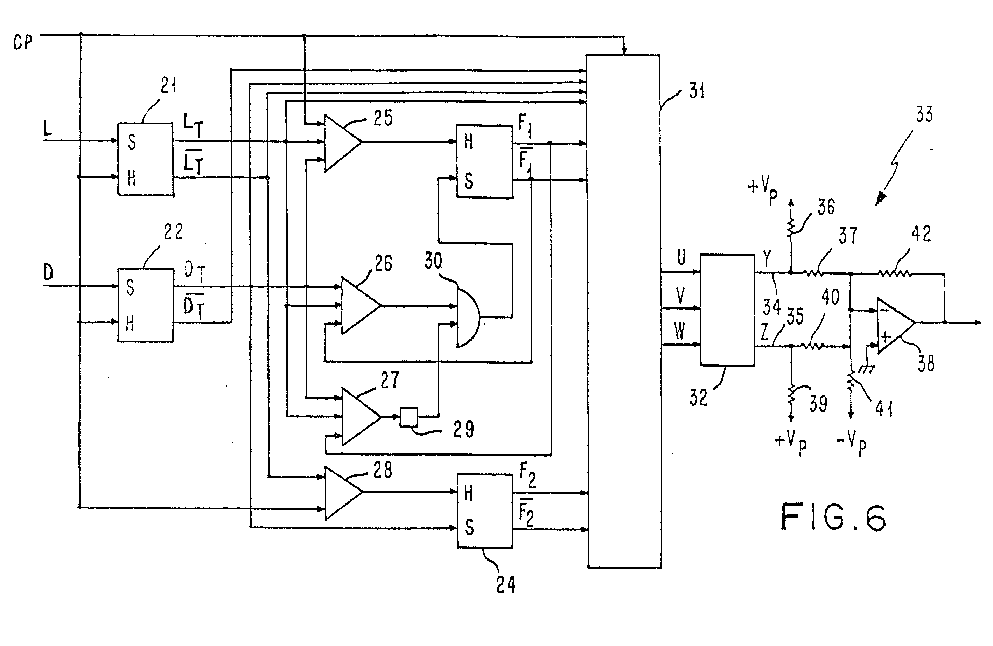

On a représenté sur la figure 6 un exemple de réalisation du circuit de codage 10. Le circuit de la figure 6 comprend quatre bascules bistables 21, 22, 23 et 24, quatre portes ET 25, 26, 27 et 28, un inverseur 29, une porte OU 30, deux circuits logiques 31 et 32 et un codeur de sortie analogique 33. Chacune des bascules 21 à 24 est représentée avec deux entrées (H et S), une sortie normale et une sortie inverse. Les bascules 21, 22 et 23 sont semblables et leur état est conditionné par le niveau logique appliqué sur son entrée S au moment où son entrée H reçoit un signal au niveau logique 1. La bascule 24 est du type flip-flop et son fonctionnement est le suivant. Si un niveau logique 1 est appliqué à son entrée S l'état de la bascule change au moment où son entrée H reçoit un signal au niveau logique 1. Si un niveau logique 0 est appliqué à son entrée S, la bascule ne change pas d'état.

Les fonctions et liaisons des différentes bascules sont résumées sur la table III ci-dessous:

TABLE III

|  | ENTREES | | SORTIE NORMALE |
|---|---|---|---|
|  | H | S |  |
| 21 | CP | L | $L_T$ |
| 22 | CP | D | $D_T$ |
| 23 | SORTIE PORTE 25 | SORTIE PORTE 30 | $F_1$ |
| 24 | SORTIE PORTIE 28 | $D_T$ | $F_2$ |

7

Les liaisons des différentes portes sont résumées sur la table IV ci-dessous:

TABLE IV

| | ENTREES | SORTIE |
|---|---|---|
| 25 | $L_T$, $D_T$, CP . | $L_T$ $D_T$ CP |
| 26 | $L_T$, $D_T$, $\overline{F_1}$ . | $L_T$ $D_T$ $\overline{F_1}$ |
| 27 | $L_T$, $D_T$, $F_1$ | $L_T$ $D_T$ $F_1$ |
| 28 | $\overline{L_T}$, CP | $\overline{L_T}$ CP |
| 30 | $L_T$ $D_T$ $\overline{F_1}$, $\overline{L_T D_T F_1}$ | $L_T$ $D_T$ $\overline{F_1}$ + $\overline{L_T D_T F_1}$ |

L'homme de l'art comprendra le fonctionnement de l'ensemble de bascules et de portes mentionné ci-dessous en se référant à la figure 6, à la table II et aux diagrammes de la figure 5.

Les signaux $L_T$, $\overline{L_T}$, $D_T$, $\overline{D_T}$, $F_1$, $\overline{F_1}$, $F_2$, $\overline{F_2}$ et CP sont appliqués au circuit logique 31 qui en dérive les signaux U, V, W conformément aux relations logiques (1), (2) et (3). Les signaux U, V, W sont appliqués au circuit logique 32 qui en dérive les signaux logiques Y et Z conformément aux relations logiques:

$$Y = U\,\overline{V}\,\overline{W} + W$$

$$Z = U\,\overline{V}\,\overline{W}$$

Les circuits logiques 31 et 32 sont constitués de façon conventionnelle par des arrangements de portes logiques.

Les signaux logiques Y et Z sont appliqués aux entrées 34 et 35 du codeur de sortie analogique 33. L'entrée 34 est reliée à une extrémité d'une résistance 36 dont l'autre extrémité est reliée à une source de tension continue fournissant une tension $+v_p$. L'entrée 34 est aussi reliée à une extrémité d'une résistance 37 dont l'autre extrémité est reliée à l'entrée inverseuse d'un amplificateur opérationnel 38. L'entrée 35 est reliée à une extrémité d'une résistance 39 dont l'autre extrémité reçoit la tension $+v_p$. L'entrée 35 est aussi reliée à une extrémité d'une résistance 40 dont l'autre entrée est reliée à l'entrée inverseuse de l'amplificateur 38. L'entrée inverseuse de l'amplificateur 38 est en outre reliée à une extrémité d'une résistance 41 dont l'autre extrémité reçoit une tension $-v_p$. La sortie de l'amplificateur 38 est reliée à son entrée inverseuse à travers une résistance 42. L'entrée non inverseuse de l'amplificateur 38 est reliée à la masse. Les résistances 36, 37, 39, 40 et 41 ont la même valeur R. Le codeur analogique de sortie 33 fournit une impulsion positive (+), une impulsion négative (−), ou pas d'impulsion (0) conformément à la table V suivante:

TABLE V

| Y | Z | SORTIE |
|---|---|---|
| 1 | 1 | (+) |
| 1 | 0 | 0 |
| 0 | 1 | 0 |
| 0 | 0 | (−) |

Par ailleurs, côté réception, l'interface INT est réalisé selon le schéma de la figure 7. La ligne de transmission aboutit à un adaptateur de ligne 50 lequel attaque un extracteur d'horloge (RC1) et un récepteur analogique (RA1). Les signaux sortant de RC1 et RA1 sont fournis à un circuit de décodage 51 que restitue les signaux d'horloge (CP), de données (D) et de commande (L). Ces derniers signaux sont ensuite démultiplexés à l'aide d'un registre à décalage DESER et d'un registre de sortie RG2.

Le récepteur analogique RA1 est représente sur la figure 8. Le signal d'entrée, égalisé en 50 est appliqué à des redresseurs mono-alternance RED 1 et RED 2, à travers un condensateur de découplage C1. RED 2 est précédé d'un inverseur INV. Un circuit SUM additionne les sorties de RED 1 et RED 2 pour fournir un signal redressé bi-alternance transmis à la fois à RC1 et à un filtre passe-bas LPF. Le circuit RC1 qui sera décrit ultérieurement, réalise des opérations d'extraction d'horloge. La sortie de LPF définit un niveau de référence continu lequel est transmis à un écréteur SQ1 à travers une résistance RA. De même, la sortie de SUM est transmise à SQ1 à travers une résistance RB. Le choix du rapport RA/RB définit le niveau ou seuil de discrimination du récepteur analogique. Ce seuil inversé en $I_1$ est utilisé pour contrôler l'ouverture de portes A1 et A2 respectivement reliées aux sorties d'écréteurs SQ2 et SQ3 au travers d'inverseurs $I_2$ et $I_3$. Les entrées de SQ2 et SQ3 sont respectivement reliées aux sorties de RED 2 et RED 1. L'apparition d'un signal à la sortie S1 de A1 traduit la réception d'un niveau (+), tandis qu'un signal à la sortie S2 de A2 indique la réception d'un niveau (—). Le récepteur analogique indique donc la position du signal reçu par rapport au seuil de discrimination. Ce signal devra être échantillonné aux instants adéquats à l'aide d'un signal CP dérivant de l'information dite d'horloge, afin de déterminer les niveaux logiques correspondant au signal reçu.

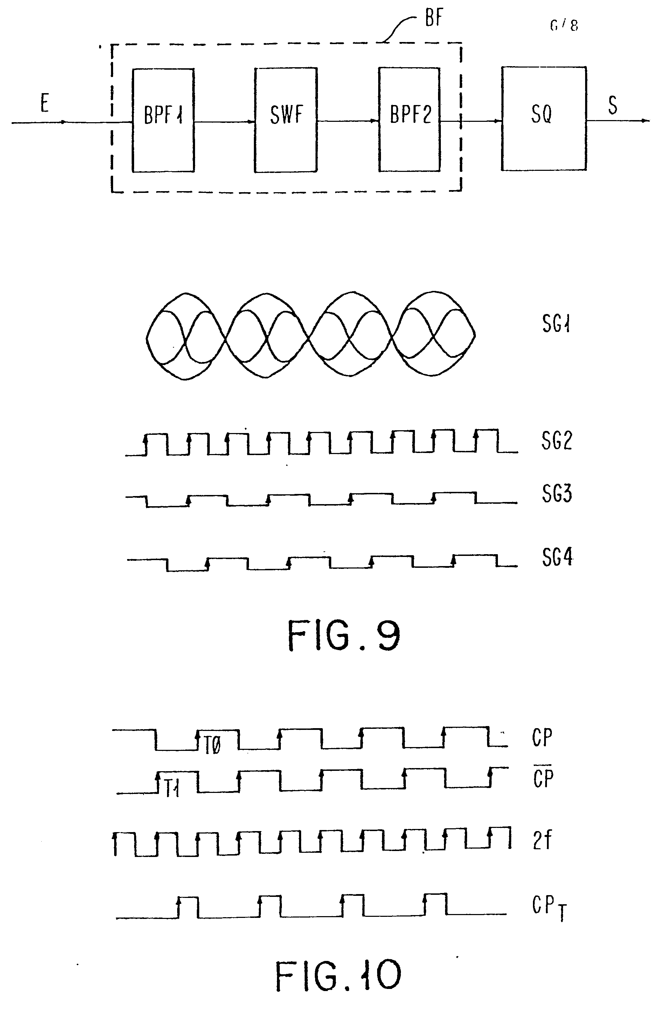

On notera que le spectre émis par l'émetteur décrit plus haut, donc aussi celui reçu à l'entrée du récepteur analogique, présente une énergie nulle pour toutes les fréquences multiples de 2f. Il est donc possible de récupérer l'information d'horloge, à la réception, par filtrage et écrêtage du signal reçu. C'est ce qu'effectue le dispositif représenté sur la figure 9, comportant un filtre BF et un écréteur SQ. Pour éviter les influences parasites, on a réalisé BF à l'aide de deux filtres passe-bande BPF1 et BPF2 centrées sur 2f et placés de part et d'autre d'un filtre commuté SWF.

On a représenté en SG1 le diagramme de l'oeil du signal bipolaire/biphasé reçu; en SG2 le signal au rythme 2f obtenu à la sortie S de SQ, et en SG3 le signal à la fréquence f obtenu par division par deux du rythme à 2f de SG2. L'ambiguïté de $\pi$ de ce signal a été levée à l'aide d'un circuit logique analysant les transitions sur le diagramme de l'oeil représenté en SG1. Enfin un déphasage de $\pi/2$ par rapport à SG3 permet d'obtenir un signal représenté en SG4 et qui sera utilisé par le circuit de décodage 51 comme signal d'échantillonnage.

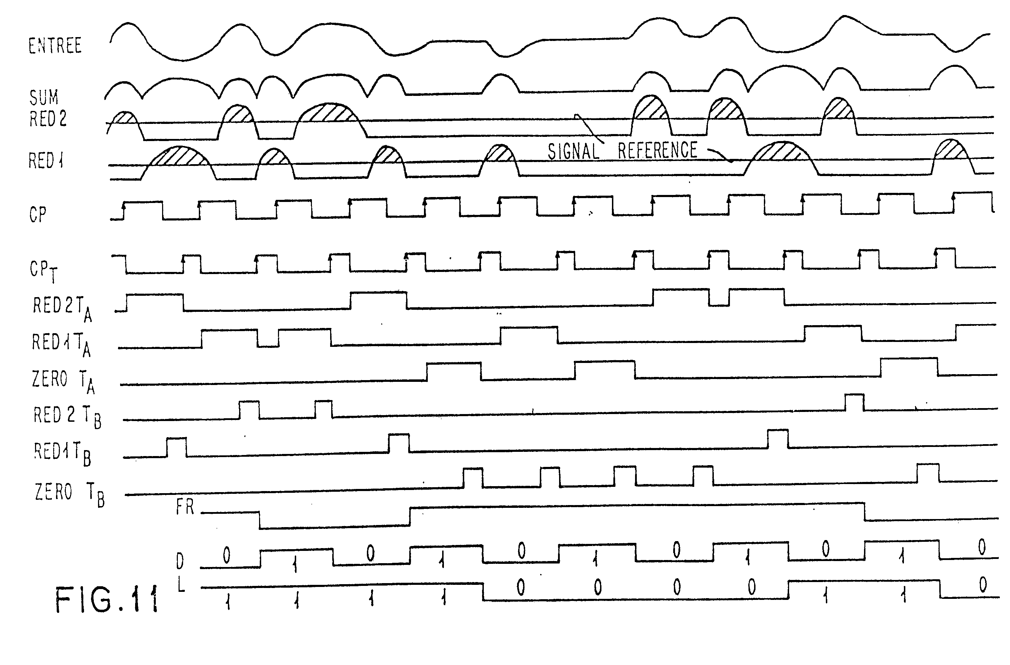

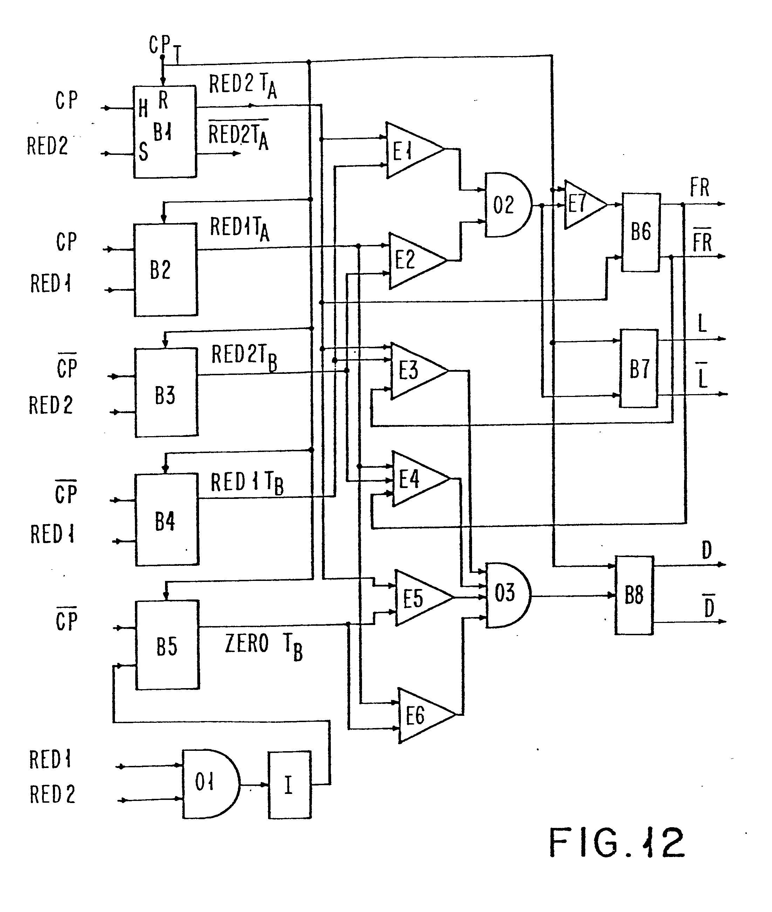

En fait, pour les besoins du circuit de décodage 51, on utilisera les signaux d'horloge de la figure 10 montrant CP, correspondant à SG4, son inverse $\overline{CP}$, mais aussi un signal à la fréquence 2f dérivé de CP et un signal $CP_T$ dont on verra le rôle plus loin (voir figure 11).

Partant des informations fournies par RA1 et RC1 et tenant compte des règles de codage utilisées par le circuit de codage 10, le circuit de décodage 51 restitue les signaux binaires recherchés. Il réalise donc une conversion de ternaire en binaire à l'aide d'opérations logiques simples, basées sur la table suivante:

TABLE VI

| $T_A$ | $T_B$ | Mémoire "biphase" FR | L | D |
|-------|-------|----------------------|---|---|
| (+) | (—) | 1<br>0 | 1<br>1 | 0<br>1 |
| (—) | (+) | 1<br>0 | 1<br>1 | 1<br>0 |
| (+) | 0 | X | 0 | 1 |
| (—) | 0 | X | 0 | 1 |
| 0 | 0 | X | 0 | 0 |

$T_A$ et $T_B$ représentent ici les instants d'échantillonnage du signal reçu. Les autres colonnes de la table VI contiennent des informations du même type que celles de la table II. Notamment la mémoire biphase (désignée ici par FR pour éviter toute confusion avec celle de l'émetteur) emmagasine 1 ou 0 selon que le signal biphasé décodé est (+), (—) ou (—), (+). Cette information sert à décoder, le signal biphasé reçu durant un temps bit subséquent. Mais on a vu plus haut qu'elle pouvait être insuffisante dans certains cas, cas où une inversion de phase s'était avérée nécessaire. C'est ainsi que si le circuit de décodage 51 constate un changement d'état du signal (+), (—) ou (—), (+), au cours d'un même temps bit, il en déduit que le signal reçu est biphasé. Donc L=1. Mais pour déterminer D, il lui faut tenir compte du contenu de la "mémoire biphase". Si celle-ci contient un "1" alors que le signal en cours de traitement est (+), (−), on peut en déduire qu'il n'y a pas eu de changement de phase, donc pas de transition à l'émission. D'où D=0. Si le contenu de la "mémoire biphase" était zéro, cela signifierait que le signal biphasé précédent était (−), (+). Il en résulterait qu'un changement de phase aurait nécessairement été effectué à l'émission (transition). D'où D=1.

Réciproquement pour un signal (−), (+) en cours de traitement, si FR=1, il y a eu changement de phase et D=1; tandis que si FR=0, il n'y a pas eu changement de phase et D=0.

On a représenté sur la figure 11 un exemple de décodage. Pour montrer que le procédé de l'invention résout automatiquement les problèmes d'ambiguïté de phase qui pourraient provenir d'une inversion côté réception, des fils de la ligne de transmission, on a choisi ici de décoder un signal reçu qui correspondrait au signal émis de la figure 5, mais qui aurait subi une rotation de $\pi$.

La première ligne de la figure 11 représente le signal reçu égalisé. C'est donc le signal se présentant à l'entrée du récepteur de la figure 8.

La seconde ligne représente le signal sortant du circuit SUM inversé.

Les troisième et quatrième lignes montrent respectivement les signaux sortant des circuits RED 2 et RED 1 du récepteur analogique. On a aussi représenté sur ces figures le niveau continu de référence fourni par le circuit LPF de la figure 8.

Les cinquième et sixième lignes représentent le signal d'horloge utilisé comme signal d'échantillonnage. Plus précisément les fronts ascendants de CP servent à échantillonner les sorties de RED 1 et RED 2 aux instants $T_A$. Quant aux fronts ascendants de $CP_T$ ils servent à restaurer les bascules logiques avant la fin de chaque bit (voir figure 12).

Les septième et huitième lignes portent respectivement les références RED 2 $T_A$ et RED 1 $T_A$. Elles indiquent un niveau logique haut lorsque, aux instants $T_A$, les signaux désignés sur la figure 11 par RED 2 et RED 1 sont au-dessus de leurs seuils de référence. L'information $CP_T$ sert à ramener les niveaux logique RED 2 $T_A$ et RED 1 $T_A$ à la valeur basse.

La neuvième ligne traduit les instants auxquels le signal d'entrée représente une valeur logique zéro pour un échantillonnage à $T_A$. Le niveau de cette ligne est haut lorsqu'aucune des sorties de RED 1 ou RED 2 n'est au-dessus du niveau de référence entre un instant défini par CP et un autre défini par $CP_T$.

Les dixième à douzième lignes jouent les mêmes rôles que les trois lignes précédentes, mais pour des instants définis par $T_B$ au lieu de $T_A$.

Le niveau logique de la "mémoire biphase" FR est représenté sur la treizième ligne.

On se rappellera que le signal FR est mis au niveau haut lorsque le signal d'entrée est biphasé et du type (+), (−) durant un même temps bit. Il reste à ce niveau jusqu'à ce que le signal d'entrée devienne biphasé (−), (+). On notera en outre que le changement de niveau de FR se manifeste avec un retard correspondant à un temps bit. Sur la figure 11, 9, durant le premier temps bit des niveaux hauts se manifestent en RED 2 $T_A$ et RED 1 $T_B$ traduisant un biphasé de type (+), (−). Durant le temps bit suivant FR=1. Puis apparaissent RED 1 $T_A$=1 et RED 2 $T_B$=1 durant deux temps bit consécutifs. Dès lors FR passe à zéro et y reste durant deux temps bit. Puis RED 2 $T_A$ = 1 et RED 1 $T_B$ = 1 réapparaissent et FR=1. Comme le signal d'entrée est bipolaire durant cinq temps bit suivants, FR passe au niveau logique haut et y reste durant six temps bit. Enfin RED 1 $T_A$ = 1 et RED 2 $T_B$ = 1 se présentant sur le décodeur, FR retombe au niveau bas. On constate que l'information FR est inversée par rapport à celle désignée par $F_1$ sur la figure 5.

Enfin, les deux dernières lignes représentent les informations binaires D et L décodées. On remarque que les signaux D et L ainsi obtenus sont identiques à ceux émis (voir figure 5), bien que le signal reçu ait été inversé par rapport au signal émis. Ceci montre l'insensibilité du procédé de transmission de l'invention à une inversion systématique de la phase du signal entre émetteur et récepteur.

La mise en oeuvre des fonctions logiques décrites ci-dessus peut être réalisée très simplement, notamment à l'aide du circuit logique de la figure 12. Ce circuit comporte sept circuits ET portant les référence E1 a E7; trois circuits OU référencés 01 à 03; un inverseur I; et huit bascules bistables B1 à B8. Lesdites bascules comportent trois entrées (R, H et S), une sortie normale et une sortie inverse. L'entrée S reçoit les données, l'entrée H est une entrée de synchronisation. L'état de la bascule est conditionné par le niveau logique appliqué sur l'entrée S au moment où l'entrée H reçoit un signal au niveau logique 1. L'entrée R sert à la restauration de la bascule.

Les fonctions et liaisons des différentes bascules sont résumées sur la table ci-dessous.

# 0 009 557

TABLE VII

| | Entrées | | | Sortie Normale |
|---|---|---|---|---|
| | H | R | S | |
| B1 | CP | $CP_T$ | RED 2 | RED 2 $T_A$ |
| B2 | CP | $CP_T$ | RED 1 | RED 1 $T_A$ |
| B3 | $\overline{CP}$ | $CP_T$ | RED 2 | RED 2 $T_B$ |
| B4 | $\overline{CP}$ | $CP_T$ | RED 1 | RED 1 $T_B$ |
| B5 | $\overline{CP}$ | $CP_T$ | I | Zéro $T_B$ |
| B6 | E7 | | RED 2 $T_A$ | FR |
| B7 | $CP_T$ | | 02 | L |
| B8 | $CP_T$ | | 03 | D |

Les fonctions logiques des autres éléments de circuits peuvent être définies comme suit:

$$01 = \text{RED 1} + \text{RED 2}$$

$$I = \overline{01}$$

$$E1 = \text{RED 2 } T_A \cdot \text{RED 1 } T_B$$

$$E2 = \text{RED 1 } T_A \cdot \text{RED 2 } T_B$$

$$E3 = \text{RED 2 } T_A \cdot \text{RED 1 } T_B \cdot \overline{FR}$$

$$E4 = \text{RED 1 } T_A \cdot \text{RED 2 } T_B \cdot \text{FR}$$

$$E5 = \text{RED 2 } T_A \cdot \text{Zéro } T_B$$

$$E6 = \text{RED 1 } T_A \cdot \text{Zéro } T_B$$

$$E7 = CP_T \cdot 02$$

$$02 = E1 + E2$$

$$03 = E3 + E5 + E6$$

On remarque que la mise en oeuvre de l'invention est relativement simple. Elle se prête particulièrement bien à la réalisation d'émetteurs récepteurs d'interfaces standards destinés notamment à des liaisons du genre DTE à DTE, DTE à modem, DTE à réseau de données, et DTE à multiplexeur. En acceptant une atténuation de 20 dB environ, il est possible de couvrir des distances de transmission sur lignes ordinaires allant jusqu'à 20 km à 2400 bps, 15 km à 4800 bps et 12 km à 9600 bps.

Bien que l'on ait décrit dans ce qui précède représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

11

## 0 009 557

### Revendications

1. Procédé pour coder simultanément une première (L) et une seconde (D) séquences de signaux binaires en une séquence d'impulsions, caractérisé en ce que:
on groupe lesdites première et seconde séquences en paires de signaux binaires, chacune d'elles comprenant un signal binaire de chacune desdites première et seconde séquences, et
on code chacune des paires de la façon suivante:
si le signal binaire provenant de ladite première séquence (L) est à un premier niveau binaire (0), on code la paire en un signal du type bipolaire, et
si le signal binaire provenant de ladite première séquence (L) est à un second niveau binaire (1), on code la paire en un signal du type biphasé.

2. Procédé selon la revendication 1, caractérisé en ce que la phase du signal biphasé ou bipolaire générée par le codage d'une paire donnée dépend de la phase du signal biphasé ou bipolaire précédent.

3. Procédé selon la revendication 2, caractérisé en ce que dans chaque paire, le signal binaire provenant de ladite second séquence (D) est codé en différentiel lorsque le signal binaire provenant de ladite première séquence (L) est audit second niveau binaire (1).

4. Procédé selon la revendication 3 caractérisé en outre en ce que la polarité du signal biphasé généré est inversée lorsque le signal binaire (D) codé en différentiel est à un niveau logique prédétermine (1).

5. Procédé selon l'une quelconque des revendications 1 à 4, caractérisé en ce que l'une, (L) au moins, desdites première et seconde séquences résulte d'un multiplexage de plusieurs autres séquences binaires (RTS, DTR, ...).

6. Procédé pour décoder un signal résultant du codage d'une première (L) et d'une seconde (D) séquences de signaux binaires conformément à l'une quelconque des revendications précédentes, caractérisé en ce qu'il comprend les étapes suivantes:
on détermine si, pendant la durée d'un signal binaire, le signal à décoder est du type biphasé ou du type bipolaire et on convertit le signal à décoder en des premier et second signaux binaires de la façon suivante:
si le signal à décoder est du type biphasé, le premier signal binaire (L) est à un premier niveau logique, (1) et le second signal binaire (D) est à un niveau binaire dont la valeur est dérivée de celle de la phase du signal biphasé, et
si le signal à décoder est du type bipolaire, le premier signal binaire (L) est à un second niveau logique (O) et le second signal binaire (D) est à un niveau binaire dont la valeur est dérivée de la forme du signal bipolaire.

7. Circuit d'interface d'émission pour transmettre une première (L) et une seconde (D) séquences de signaux binaires à travers un même milieu de transmission, caractérise en ce qu'il comprend:
un circuit de codage (10) à trois entrées dont la première reçoit ladite première séquence (L), la seconde reçoit ladite seconde séquence (D), et la troisième reçoit une information dite d'horloge (CP) synchronisant les opérations d'élaboration du signal codé à partir desdites séquences binaires, ce circuit de codage générant une séquence d'impulsions conformément au procédé de l'une quelconque des revendications 1 à 4, et
des moyens (14) pour appliquer ladite séquence d'impulsions au milieu de transmission.

8. Circuit d'interface selon la revendication 8 caractérisé en ce qu'il comprend:
un circuit de multiplexage (RG1, SER) engendrant ladite première séquence par multiplexage dans le temps de plusieurs informations binaires.

### Patentansprüche

1. Verfahren zur gleichzeitigen Kodierung einer ersten (L) und zweiten (D) Folge von Binärsignalen in eine Impulsfolge,
dadurch gekennzeichnet, daß
diese erste und zweite Folge in Binärsignalpaare gruppiert wird, wobei jedes Paar ein Binärsignal aus der ersten und der zweiten Folge enthält, und
jedes Paar in der folgenden Weise kodiert wird:
Ist das aus der ersten Folge (L) stammende Binärsignal in einem ersten binären Zusand (O), wird das Paar in ein Signal vom Bipolartyp kodiert,
Ist das aus der ersten Folge (L) stammende Binärsignal in einem zweiten binären Zustand (1), wird das Paar in ein Signal vom Biphasentyp kodiert.

2. Verfahren nach Anspruch 1, dadurch gekennzeichnet, daß die Phase des durch die Kodierung eines gegebenen Paares erhaltenen Biphasen- oder Bipolarsignals von der Phase des vorhergehenden Biphasen- oder Bipolarsignals abhängt.

3. Verfahren nach Anspruch 2, dadurch gekennzeichnet, daß in jedem Paar das von der zweiten Folge (D) stammende Binärsignal differentiell kodiert ist, wenn sich das aus der ersten Folge (L) stammende Binärsignal in einem zweiten binären Zustand (1) befindet.

12

0 009 557

4. Verfahren nach Anspruch 3, weiterhin dadurch gekennzeichnet, daß die Polarität des erzeugten Biphasensignals umgekehrt wird, wenn sich das differentiell kodierte Binärsignal (D) in einem vorbestimmten logischen Zustand (1) befindet.

5. Verfahren nach einem der Ansprüche 1 bis 4, dadurch gekennzeichnet, daß wenigstens eine (L) der ersten oder zweiten Folge durch das Multiplexieren verschiedener anderer Binärfolgen (RTS, DTR, ...) entsteht.

6. Verfahren zur Dekodierung eines durch Kodierung einer ersten (L) und zweiten (D) Folge von Binärsignalen erhaltenen Signals nach einem der vorhergehenden Ansprüche, dadurch gekennzeichnet, daß es folgende Verfahrensschritte einschließt:

Bestimmung ob während der Dauer eines Binärsignals das zu dekodierende Signal vom Biphasen- oder Bipolartyp ist, und

Umsetzen des zu dekodierenden Signals in ein erstes und zweites Binärsignal wie folgt:

ist das zu dekodierende Signal vom Biphasentyp, so befindet sich das erste Binärsignal (L) in einem ersten logischen Zustand (1) und das zweite Binärsignal (D) in einem binären Zustand, dessen Wert von dem der Phase des Biphasensignals abgeleitet wird, und

ist das zu dekodierende Signal vom Bipolartyp, so befindet sich das erste Binärsignal (L) in einem zweiten logischen Zustand (O) und das zweite Binärsignal (D) in einem binären Zustand, dessen Wert von der Form des Bipolarsignals abgeleitet wird.

7. Sendeschnittstellenschaltung zum Senden einer ersten (L) und zweiten (D) Folge von Binärsignalen über denselben Sendekanal, dadurch gekennzeichnet, daß sie einschließt:

eine Kodierungsschaltung (10) mit drei Eingängen, wobei der erste Eingang die erste Folge (L) erhält, der zweite Eingang die zweite Folge (D), und der dritte Eingang Taktinformation (CP) zum Synchronisieren der Operationen zum Erzeugen des kodierten Signals aus den binären Folgen und wobei diese Kodierungsschaltung eine Impulsefolge gemäß einem der Ansprüche 1 bis 4 des Verfahrens erzeugt, und

Mittel (14) zum Aussenden der Impulsfolge über den Sendekanal.

8. Schnittstellenschaltung nach Anspruch 7, gekennzeichnet durch eine Multiplexschaltung (RG1, SER) zum Erzeugen der ersten Folge durch Zeitmultiplexieren mehrerer Binärinformationen.

**Claims**

1. A method for simultaneously encoding a first (L) and a second (D) sequence of binary signals into a pulse sequence, characterized in that:

said first and second sequences were grouped in binary signal pairs, each pair comprising a binary signal from each of said first and second sequences, and

each pair is encoded in the following manner:

if the binary signal from said first sequence (L) assumes a first binary state (0), the signal pair is encoded into a bipolar type signal, and

if the binary signal from said first sequence (L) assumes a second binary state (1), the signal pair is encoded into a biphase type signal.

2. A method according to claim 1, characterized in that the phase of the biphase or bipolar signal generated by encoding a given pair depends on the phase of the preceding biphase or bipolar signal.

3. A method according to claim 2, characterized in that in each pair, the binary signal from said second sequence (D) is encoded in differential mode when the binar signal from said first sequence (L) assumes said second binary state (1).

4. A method according to claim 3, furthermore characterized in that the polarity of the generated biphase signal is inverted when the binary signal (D) encoded in differential mode assumes a predetermined logic state (1).

5. A method according to any one of claims 1 to 4, characterized in that at least one (L) of said first and second sequences is obtained by multiplexing several other binary sequences (RTS, DTR, ...).

6. A method for decoding a signal obtained by encoding a first (L) and a second (D) sequence of binary signals according to any one of the preceding claims, characterized in that it includes the steps of:

determining if, during the time duration of a binary signal the signal to be decoded is of the biphase or bipolar type, and converting the signal to be decoded into a first and a second binary signal in the following manner:

if the signal to be decoded is of the biphase type, the first binary signal (L) assumes a first logic state (1) and the second binary signal (D) assumes a binary state whose value is derived from that of the phase of the biphase signal, and

if the signal to be decoded is of the bipolar type, the first binary signal (L) assumes a second logic state (0), and the second binary signal (D) assumes a binary state whose value is derived from the bipolar signal shape.

7. A transmit interface circuit to transmit a first (L) and a second (D) sequence of binary signals via the same transmission media, characterized in that it comprises:

an encoding circuit (10) having three inputs, the first input receiving said first sequence (L), the second input receiving said second sequence (D), and the third input receiving a so-called clock information (CP) synchronizing the generation operations of the encoded signal from said binary sequences, the encoding circuit generating a pulse sequence according to the method as claimed by any one of claims 1 to 4, and

means (24) for applying said pulse sequence to the transmission media.

8. An interface circuit according to claim 8, characterized in that it includes:

a multiplex circuit (RG1, SER) generating said first sequence by time multiplexing several binary information signals.

# FIG. 1

# FIG. 2

# FIG. 3

FIG. 4

FIG. 7

FIG. 5

FIG.6

FIG. 8

BF

E → BPF 1 → SWF → BPF2 → SQ → S

SG1

SG2

SG3

SG4

# FIG. 9

CP

$\overline{CP}$

2f

$CP_T$

T0

T1

# FIG. 10

ENTREE

SUM
RED 2

RED 1

CP

SIGNAL REFERENCE

$CP_T$

$RED\,2\,T_A$

$RED\,1\,T_A$

$ZERO\ T_A$

$RED\,2\,T_B$

$RED\,1\,T_B$

$ZERO\ T_B$

FR

D

L

FIG.11

7

FIG. 12